# FASCICULE DE BREVET EUROPEEN

(11) **EP 2 879 921 B1**
(45) Date de publication et mention de la délivrance du brevet: **21.09.2016**
(21) Numéro de dépôt: 13756628.7
(22) Date de dépôt: 30.07.2013
(51) Int. Cl.: B60S 1/38, B60S 1/52

(54) **DISPOSITIF DE CONNEXION ENTRE UN BRAS D'ESSUYAGE ET UN BALAI D'ESSUYAGE, COMPRENANT UN TUBE SURMOULE**
VORRICHTUNG ZUM VERBINDEN EINES WISCHARMS UND EINES WISCHBLATTS MIT EINEM UMSPRITZTEN ROHR
DEVICE FOR CONNECTING A WIPER ARM AND A WIPER BLADE TOGETHER INCLUDING AN OVERMOULDED TUBE

(30) Priorité: 02.08.2012 FR 1257517
(43) Date de publication de la demande: 10.06.2015
(73) Titulaire: Valeo Systèmes d'Essuyage, 78321 Le Mesnil Saint Denis (FR)
(72) Inventeur: THEBAULT, Denis, F-63000 Clermont Ferrand (FR); POTON, Eric, F-63430 Pont du Château (FR)
(74) Mandataire: Callu Danseux, Violaine
(86) Numéro de dépôt international: PCT/FR2013/051839
(87) Numéro de publication internationale: WO 2014/020279

(56) Documents cités:
- EP-A1- 1 400 422
- DE-A1-102006 013 900
- US-A1- 2011 107 541

## Description

Le domaine de la présente invention est celui des équipements pour les véhicules, et plus particulièrement celui des équipements pour l'essuyage des vitres d'un véhicule. La présente invention vise un dispositif de connexion assurant une liaison mécanique entre un bras d'essuyage et un balai d'essuyage apte à essuyer un pare-brise ou une vitre arrière du véhicule.

Les véhicules automobiles sont couramment équipés de système d'essuie-glace pour assurer un balayage et un lavage du pare-brise et éviter que la vision qu'a le conducteur de son environnement ne soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans cette seconde solution, le balai est rattaché au bras tournant de l'essuie-glace par un ensemble constitué d'un connecteur mécanique et d'un adaptateur. Le connecteur mécanique est une pièce qui est sertie directement sur le balai plat, alors que l'adaptateur est une pièce intermédiaire qui permet la fixation du connecteur sur le bras de l'essuie-glace.

Le connecteur mécanique évoqué ci-dessus est fabriqué par un procédé de moulage, comprenant au moins un tiroir dont l'extraction permet de générer des évidements dans lesquels un liquide de lavage du pare-brise peut circuler. Ce procédé de moulage impose un retrait du tiroir au niveau d'une face externe du connecteur. Par ailleurs, ce retrait génère un manchon qui déborde de la face externe du connecteur.

Un tel procédé de fabrication présente plusieurs inconvénients.

En premier lieu, le manchon est généré sur une face externe du connecteur au niveau de laquelle il peut être nécessaire de créer un orifice de pulvérisation du liquide de lavage sur le pare-brise. La présence du manchon gène alors la fabrication de l'orifice de pulvérisation, en particulier lorsque la position du manchon est en interférence avec la position de l'orifice de pulvérisation.

En second lieu, la présence du manchon débordant du connecteur mécanique dégrade l'aspect esthétique général de ce connecteur, en particulier en raison du fait qu'il faut obturer ce manchon par des moyens rapportés sur le connecteur.

US-A-2011/107541 montre le préambule de la revendication 1.

Le but de la présente invention est donc de résoudre les inconvénients décrits ci-dessus en concevant un dispositif de connexion qui ne nécessite pas l'utilisation d'un tiroir pour générer un évidement dans le dispositif de connexion. Le circuit de liquide est créé par un tube préalablement formé, autour duquel des formes fonctionnelles du dispositif de connexion sont surmoulées.

L'invention a donc pour objet un dispositif de connexion apte à relier un balai d'essuyage d'une vitre d'un véhicule à un bras d'essuyage, comprenant au moins un moyen de solidarisation sur le balai d'essuyage et un moyen de liaison avec le bras d'essuyage, ledit dispositif de connexion comprenant un circuit apte à canaliser un liquide, caractérisé par le fait que le circuit est délimité par au moins un tube et en ce que le moyen de solidarisation et le moyen de liaison sont moulés au moins en partie autour du tube. Un tel dispositif de connexion est reconnaissable par exemple en effectuant une coupe de celui-ci passant par le circuit, et en constatant l'existence d'une délimitation entre le matériau constitutif du tube et la matière du dispositif de connexion qui entoure au moins partiellement ce tube. Un tel dispositif de connexion est encore reconnaissable en ce qu'il ne comporte pas de forme particulière sur la surface externe du dispositif de connexion dans le prolongement du canal, cette forme étant notamment liée à l'extraction du tiroir dans le procédé de fabrication de l'art antérieur.

Selon un exemple de l'invention, le tube délimite un conduit qui s'étend selon une direction longitudinale d'extension du dispositif de connexion, raccordé hydrauliquement à un canal qui s'étend selon un axe transversal à la direction longitudinale.

Selon un exemple de réalisation, le tube peut délimiter un premier et un deuxième conduit qui s'étendent tous deux parallèlement à la direction longitudinale d'extension du dispositif de connexion. Une telle solution permet d'alimenter en liquide un balai d'essuyage pourvu d'au moins une première rampe en amont du balai et d'une seconde rampe en aval du balai, selon le mouvement de rotation du balai d'essuyage. De manière particulière, le balai d'essuyage peut ainsi comprendre quatre rampes, réparties deux-à-deux de part et d'autre du dispositif de connexion.

Selon un autre exemple de réalisation, le tube délimite une canalisation en communication avec le canal, ladite canalisation s'étendant selon un axe concourant à l'axe d'extension du canal. Cette canalisation alimente en liquide le canal, et forme ainsi une canalisation d'alimentation de ce canal.

Le dispositif de connexion selon l'invention peut comprendre une embase dans laquelle est ménagé le conduit, ladite embase étant surmontée par un flanc dans lequel sont ménagés au moins en partie le canal et le moyen de liaison. L'embase et le flanc sont ainsi moulés autour du tube délimitant le circuit.

On notera que le moyen de solidarisation peut être ménagé dans l'embase.

De manière optionnelle, la canalisation est formée dans le flanc. Cette dernière est apte à alimenter en liquide le canal.

Selon un exemple de l'invention, la canalisation délimitée par le tube débouche du flanc. Il est ainsi formé un embout sur lequel un tube de transport de liquide du bras d'essuyage peut être enfilé.

Le conduit délimité par le tube débouche d'au moins une extrémité longitudinale de l'embase. Ce conduit assure la distribution du liquide dans deux portions du balai d'essuyage situées de part et d'autre du dispositif de connexion. Les parties débouchantes du conduit forment des embouts sur lesquels une ou plusieurs rampes de projection équipant le balai d'essuyage peuvent être enfilées sur les embouts.

Selon un mode de réalisation, le tube est tout ou partie réalisé en une matière métallique. Alternativement, le tube est au moins en partie réalisé en une matière synthétique.

Le moyen de solidarisation et le moyen de liaison, notamment l'embase et le flanc du dispositif de connexion, sont réalisés en une matière synthétique, cette dernière entourant tout ou partie du tube. Il s'agit par exemple d'un surmoulage de matière plastique, notamment chargée en fibres de verre.

Le dispositif de connexion selon l'invention peut comporter une zone dans laquelle est ménagé au moins un orifice de projection agencé pour projeter le liquide sur la vitre. Une telle zone forme une surface externe de l'embase dépourvue de forme issue de moulage dans le prolongement du canal.

L'invention concerne également un système d'essuyage d'une vitre d'un véhicule, comprenant un balai d'essuyage relié mécaniquement à un bras d'essuyage au moins par un dispositif de connexion tel que détaillé ci-dessus.

Dans une telle situation, le balai d'essuyage comprend au moins une rampe de projection d'un liquide de lavage de la vitre alimentée en liquide de lavage par le dispositif de connexion. Une telle rampe peut être scindée en deux portions, chacune s'étendant longitudinalement le long du balai d'essuyage de part et d'autre du dispositif de connexion. Ces portions peuvent être formées par deux déflecteurs d'air rapportés sur le balai d'essuyage.

Un tout premier avantage selon l'invention réside dans l'absence de manchon débordant du dispositif de connexion, au niveau d'une zone où il est approprié de ménager un ou des orifices de projection.

Une telle absence permet de positionner un ou des orifices de projection sur le dispositif de connexion sans que ce positionnement ne soit gêné par la présence d'un manchon débordant. Un tel effet est particulièrement intéressant pour respecter un principe de répartition des orifices de projection tout le long de la direction d'extension longitudinale du balai d'essuyage, y compris au niveau du dispositif de connexion. Un exemple de ce principe est notamment exposé dans le document WO2011/160952A1.

En outre, l'aspect esthétique du dispositif de connexion est significativement amélioré, puisque la forme disgracieuse du manchon peut être supprimée.

D'autres caractéristiques, détails et avantages de l'invention ressortiront plus clairement à la lecture de la description donnée ci-après à titre indicatif en relation avec des dessins dans lesquels :
- la figure 1 est une vue générale, en perspective, d'un système d'essuyage pour un vitrage d'un véhicule automobile selon l'invention,
- la figure 2 est une vue en perspective d'un tube employé dans le dispositif de connexion selon l'invention,
- la figure 3 est une vue en perspective d'un dispositif de connexion selon l'invention.

Il faut noter que les figures exposent l'invention de manière détaillée pour mettre en oeuvre l'invention, lesdites figures pouvant bien entendu servir à mieux définir l'invention le cas échéant.

Dans la suite de la description, les dénominations longitudinales ou latérales se réfèrent à l'orientation du balai d'essuyage ou du dispositif de connexion selon l'invention. La direction longitudinale correspond à l'axe principal du balai d'essuyage dans lequel il s'étend, alors que les orientations latérales correspondent à des droites concourantes, c'est-à-dire qui croisent la direction longitudinale, notamment perpendiculaires à l'axe longitudinal du balai d'essuyage dans son plan de rotation. Pour les directions longitudinales, les dénominations extérieure ou intérieure s'apprécient par rapport au point de fixation du balai sur le bras, la dénomination intérieure correspondant à la partie où le bras et un demi-balai s'étendent. Enfin, les directions référencées comme supérieures ou inférieures correspondent à des orientations perpendiculaires au plan de rotation du balai d'essuyage, la dénomination inférieure contenant le plan du pare-brise.

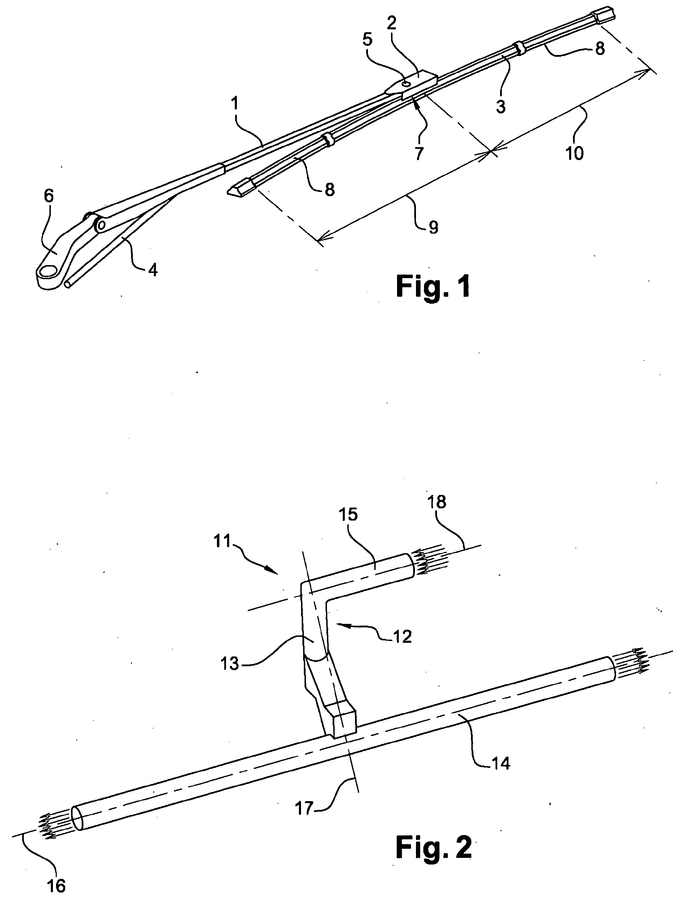

En se référant tout d'abord à la figure 1, on voit un système d'essuyage composé d'un porte-balai ou bras d'essuyage 1 se prolongeant à son extrémité extérieure par une pièce terminale 2, qui est fixée, du côté intérieur, par exemple par un sertissage sur le bras d'essuyage 1. La pièce terminale 2 coopère avec un adaptateur porteur d'un balai d'essuyage 3 par l'intermédiaire d'un dispositif de connexion 7 selon l'invention. L'adaptateur a vocation à, par exemple, s'insérer dans la pièce terminale 2 par un mouvement de translation selon une direction longitudinale, pour venir dans une position d'utilisation, où il est positionné en butée contre une forme coopérante donnée à la pièce terminale 2. Il y est alors fixé de façon réversible au moyen, par exemple, d'un bouton escamotable de verrouillage 5, qui est fixé en extrémité d'une languette flexible issue de l'adaptateur et qui coopère avec un évidement pratiqué à cet effet dans la partie supérieure de la pièce terminale 2.

L'adaptateur et le dispositif de connexion 7 sont reliés mécaniquement l'un à l'autre par l'intermédiaire d'un moyen de liaison. Selon un exemple de réalisation, ce moyen de liaison est une liaison pivot ménagée entre l'adaptateur et le dispositif de connexion 7 selon l'invention. Le balai d'essuyage 3 est ainsi maintenu en translation vis-à-vis du bras d'essuyage 1, alors qu'une rotation autour de la liaison pivot est autorisée par le moyen de liaison.

Un tube 4 d'amenée de liquide chemine le long du bras d'essuyage 1. Ce tube 4 canalise un liquide de lavage du pare-brise pour l'amener au niveau du dispositif de connexion 7 entre le bras d'essuyage 1 et le balai d'essuyage 3.

Le balai d'essuyage 3 comprend au moins une rampe de projection 8 du liquide de lavage de la vitre. Cette rampe de projection 8 est alimentée en liquide de lavage par le dispositif de connexion 7. Une telle rampe de projection 8 peut être répartie de part et d'autre du dispositif de connexion 7 en une première portion référencée 9 et une deuxième portion référencée 10. La première portion 9 s'étend longitudinalement le long du balai d'essuyage 3, du côté intérieur de celui-ci, alors que la deuxième portion 10 s'étend longitudinalement le long du balai d'essuyage 3, du côté extérieur de ce dernier. La première portion 9 et la deuxième portion 10 sont toutes deux raccordées hydrauliquement au dispositif de connexion 7.

La rampe de projection 8 peut par exemple être formée par un tube pourvu d'orifices d'aspersion, puis rapportée sur le balai d'essuyage 3. Elle peut également être mise en oeuvre par un déflecteur d'air qui coiffe le balai d'essuyage 3 et dans lequel est ménagé, d'une part un conduit de circulation du liquide de lavage qui s'étend le long de la direction longitudinale du balai d'essuyage 3, et d'autre part une multiplicité d'orifices d'aspersion du liquide de lavage.

Le balai d'essuyage 3 peut comprendre un support à l'intérieur duquel est logée une vertèbre de rigidification. Alternativement, le support peut être pourvu de deux fentes ouvertes et disposées latéralement, ces deux fentes recevant chacune une vertèbre de rigidification. Le support comprend encore une cavité longitudinale dans laquelle est enfilée une raclette, autrement appelée lame de balayage. Cette dernière est un composant souple du balai d'essuyage 3 en appui contre la face extérieure du pare-brise.

Sur sa partie supérieure, le support peut être recouvert par le déflecteur d'air agencé pour utiliser l'effet dynamique du déplacement du véhicule pour augmenter la force d'appui du balai d'essuyage 3 sur le pare-brise. Comme évoqué plus haut, ce déflecteur d'air peut également former la rampe de projection dont le balai d'essuyage 3 est pourvu.

A l'extrémité opposée à la pièce terminale 2 par rapport au bras d'essuyage 1, on trouve un entraîneur 6 pourvu d'un trou au travers duquel un arbre d'un moteur d'entraînement ou d'une tringlerie passe en vue de mettre en rotation le système d'essuyage.

La figure 2 montre une partie semi-finie constitutive du dispositif de connexion selon l'invention. Il s'agit du circuit 11 du dispositif de connexion dont la fonction est de canaliser le liquide de lavage du pare-brise pour le distribuer dans chacune des portions de la rampe de projection du balai d'essuyage.

Ce circuit 11 est délimité par au moins un tube 12 à l'intérieur duquel le liquide de lavage peut circuler. Selon l'exemple de la figure 2, le circuit comprend un premier tube ci-après appelé canal 13, en communication hydraulique avec un deuxième tube, appelé conduit 14. De manière optionnelle, le circuit 11 comprend un troisième tube appelé canalisation 15, cette dernière servant à alimenter en liquide de lavage le canal 13.

Le conduit 14 forme la partie du circuit qui distribue le liquide selon deux sens opposés, vers chacune des portions de la rampe de projection du balai d'essuyage. Le canal 13 forme la partie du circuit qui alimente en liquide le conduit 14. Enfin, la canalisation 15 forme la partie de circuit qui alimente en liquide le canal 13.

Le conduit 15 s'étend selon une direction longitudinale 16 d'extension du dispositif de connexion. Cette direction longitudinale 16 est par exemple rectiligne. Le canal 13 s'étend selon un axe 17 transversal, et par exemple perpendiculaire, à la direction longitudinale 16. Le canal 13 est notamment installé au centre du conduit 14, selon la direction longitudinale 16.

La canalisation 15 s'étend quant à elle le long d'un axe 18 concourant, par exemple perpendiculaire, à l'axe 17 du canal 13. L'axe 18 de la canalisation peut ainsi être parallèle à la direction longitudinale 16 d'extension du conduit 14.

Selon un exemple de réalisation, le tube 12 peut être métallique, notamment réalisé en un alliage d'aluminium, en laiton ou en acier. Alternativement, le tube 12 peut être réalisé en un matériau synthétique.

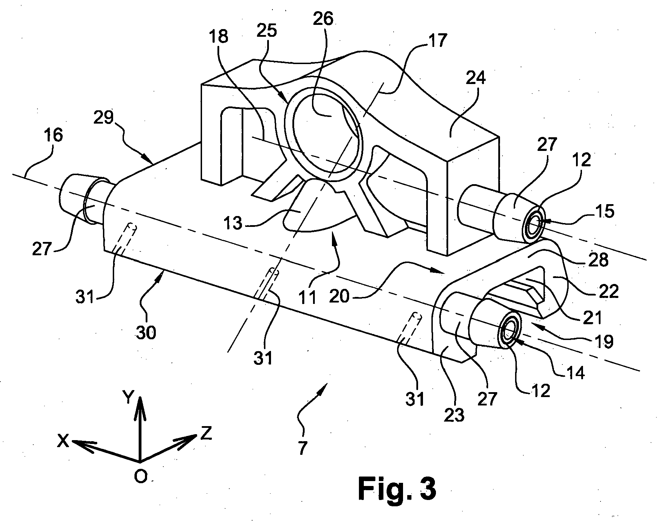

En se référant maintenant à la figure 3, on voit plus précisément le dispositif de connexion 7 selon l'invention. Cette pièce est définie dans un repère orthonormé OX-OY-OZ, où la direction OX représente une direction longitudinale, la direction OZ représente une direction verticale et la direction OY représente une direction transversale.

Ce dispositif de connexion 7 est agencé pour être rendu solidaire, par exemple par sertissage, du balai d'essuyage qui se déplace sur le pare-brise de véhicule. Un tel balai d'essuyage est entraîné en rotation par le bras d'essuyage.

Le dispositif de connexion 7 assure une liaison mécanique dite complète avec le balai d'essuyage, en ce sens qu'il n'existe pas de degré de liberté. Cette liaison mécanique complète est assurée par un moyen de solidarisation 19 agencé sur le dispositif de connexion 7.

Le dispositif de connexion 7 comprend une embase 20 qui s'étend longitudinalement et transversalement. Cette embase 20 reçoit le moyen de solidarisation 19 sur le balai d'essuyage, et plus particulièrement sur une vertèbre de rigidification de ce balai d'essuyage. Ce moyen de solidarisation 19 prend par exemple la forme d'au moins une saignée 21 ménagée dans l'embase 20.

Selon un exemple de réalisation, l'embase 20 peut comprendre deux saignées 21 opposées l'une à l'autre et chacune ménagée dans des bras 22 et 23 délimitant l'embase 20. Ces deux saignées 21 forment ainsi des crochets aptes à venir en prise sur le balai d'essuyage.

L'embase 20 est surmontée d'un flanc 24, par exemple issu de matière avec cette embase 20. Ce flanc 24 présente une dimension transversale et une dimension longitudinale inférieures à celles de l'embase 20. Le flanc 24 est par exemple centré sur l'embase 20, selon l'axe transversal OY et l'axe longitudinal OX.

Le dispositif de connexion 7 et le bras d'essuyage, notamment via l'adaptateur, sont reliés mécaniquement par un moyen de liaison 25, par exemple une liaison pivot. En ce qui concerne le dispositif de connexion 7, cette liaison pivot est mise en oeuvre par une cavité 26 réalisée dans le flanc 24. Cette cavité 26 s'étend selon une direction parallèle à la direction transversale OY. En d'autres termes, la cavité 26 peut être un trou d'axe central parallèle à la direction transversale OY. Dans le plan OXZ, la cavité 26 présente une section circulaire.

Le dispositif de connexion 7 assure une fonction de transport et de distribution du liquide de lavage du pare-brise. Pour ce faire, le dispositif de connexion 7 comprend le circuit 11 détaillé en rapport avec la figure 2.

Selon l'invention, le moyen de solidarisation 19 et le moyen de liaison 25 sont moulés au moins en partie autour du circuit 11, c'est-à-dire autour du tube 12 formant au moins le canal 13. De manière avantageuse, le moyen de solidarisation 19 et le moyen de liaison 25 sont moulés tout autour et sur l'intégralité du tube 12 formé par le conduit 14, le canal 13 et la canalisation 15, à l'exception bien entendu des orifices à l'extrémité du conduit 14 et de la canalisation 15. On comprend ici que le moyen de solidarisation 19 et le moyen de liaison 25 sont surmoulés sur le tube 12.

L'embase 20 est au moins en partie surmoulée autour du tube 12 formant le conduit 14, alors que le flanc 24 est au moins en partie surmoulé autour du tube 12 formant le canal 13 et la canalisation 15.

Ce surmoulage est réalisé par une injection de résine synthétique à l'intérieur d'un moule contenant le tube 12. La résine à l'état liquide se répartie tout autour du tube 12 et emprisonne celui-ci. Après solidification, le dispositif de connexion 7 peut être exploité. L'invention évite ici l'emploi de tiroirs extractibles utilisés pendant le procédé de moulage.

Le conduit 14 est délimité par le tube 12 qui s'étend de manière à former un évidement rectiligne, notamment de section circulaire. Ce conduit 14 s'étend selon la direction longitudinale 16, cette dernière étant parallèle à la direction longitudinale OX. Un tel conduit 14 est ménagé sur un côté de l'embase 20, cette dernière donnant naissance à deux embouts 27 qui recouvrent deux extrémités longitudinales du tube 12 formant le conduit 14.

Le moyen de distribution du liquide de lavage constitutif du balai d'essuyage, par exemple le déflecteur d'air évoqué plus haut, est ainsi enfilé sur chaque embout 27.

Le flanc 24 entoure le tube 12 formant le canal 13 agencé dans le dispositif de connexion 7 pour alimenter en liquide le conduit 14. Le canal 13 et le conduit 14 sont ainsi en communication hydraulique l'un avec l'autre. Le canal 13 est délimité par le tube 12 qui s'étend de manière rectiligne selon l'axe 17 transversal avec le conduit 14, avantageusement concourant avec la direction longitudinale 16 du conduit 14.

Selon un exemple de réalisation, le canal 13 peut être disposé de manière perpendiculaire au conduit 14. En d'autres termes, l'axe 17 du canal 13 est orthogonal à la direction longitudinale 16 du conduit 14. Le terme perpendiculaire couvre tous les positionnements sensiblement perpendiculaires du canal 13 vis-à-vis du conduit 14, c'est-à-dire en y incorporant les tolérances de fabrication du dispositif de connexion 7.

Selon un mode exemplatif de l'invention, le tube 12 est formé de telle sorte que le canal 13 soit raccordé au conduit 14 en un endroit particulier de ce dernier. Le canal 13 est ainsi centré sur le conduit 14 selon la direction longitudinale 16, par rapport à deux extrémités longitudinales 28 et 29 bordant l'embase 20. Autrement dit, une première distance séparant l'axe 17 du canal 13 d'une première extrémité longitudinale 28 de l'embase 20 est égale, ou sensiblement égale en raison des tolérances de fabrication, à une deuxième distance qui sépare ce même axe 17 d'une deuxième extrémité longitudinale 29 bordant l'embase 20. Une telle égalité peut également s'apprécier aux regards de bords terminaux des embouts 27.

La disposition perpendiculaire et centrée du canal 13 par rapport au conduit 14 permet de répartir le liquide circulant dans le conduit de manière identique de part et d'autre du canal 13.

Selon un exemple de réalisation, le dispositif de connexion 7 reçoit le tube 12 de manière à ce que la canalisation 15 soit reliée hydrauliquement au canal 13. Cette canalisation 15 a pour fonction d'alimenter en liquide le canal 13, et de manière subséquente le conduit 14. Cette canalisation 15 est délimitée par le tube 12 qui s'étend de manière rectiligne dans le flanc 27, le tube 12 débouchant du dispositif de connexion 7 par un embout 27 de manière à raccorder hydrauliquement le dispositif de connexion au tube d'alimentation en liquide référencé 4 sur la figure 1. Cette canalisation 15 s'étend selon l'axe 18 transversal, autrement dit concourant, avec l'axe 17 du canal 13. Cet axe 18 de la canalisation 15 peut par exemple être parallèle à la direction longitudinale 16 le long de laquelle le conduit 14 s'étend.

Selon un exemple de l'invention, le dispositif de connexion 7 peut comprendre une zone 30 aménagée le long du conduit 14 permettant de réaliser au moins un orifice de projection 31 du liquide sur la vitre essuyé par le balai d'essuyage. Avantageusement, la zone 30 permet de répartir une pluralité d'orifices de projection 31. Une telle zone 30 est dépourvue de forme susceptible de gêner la répartition des orifices de projection 31, notamment grâce au fait que le dispositif de connexion n'est pas fabriqué à partir de tiroir pendant l'opération de moulage. Il n'existe ainsi pas de forme qui déborde du dispositif de connexion au niveau de la zone 30, dans le prolongement axial du canal 13. Cette possibilité résulte de l'invention, c'est-à-dire du fait que le circuit est délimité par un tube autour duquel on moule le reste du dispositif de connexion, c'est-à-dire au moins le moyen dé solidarisation et le moyen de liaison.

Le ou les orifices de projection 31 sont par exemple des trous d'axe transversal, et avantageusement perpendiculaire, à la direction longitudinale 16 du conduit 14. Ces trous relient ainsi le conduit 14 au milieu environnant le dispositif de connexion 7.

Selon un exemple de réalisation, cette zone 30 est ménagée sur une face externe de l'embase 20. Cette zone s'étend selon la direction longitudinale OX, parallèlement au conduit 14, et sur un secteur angulaire déterminé autour de la direction longitudinale 16 du conduit 14. Cette zone 30 est par exemple formée sur une partie inférieure de l'embase 20, c'est-à-dire de manière adjacente au moyen de solidarisation 19.

Le flanc 24 surplombant l'embase 20, on considère que la zone 30 est aménagée sur une portion de la face externe de l'embase 20 opposée au flanc 24 par rapport au conduit 14.

Selon un exemple de réalisation, il est ainsi considéré qu'une zone 30 est formée dès lors qu'il existe une paroi lisse de la face externe de l'embase 20 qui s'étend longitudinalement selon la direction longitudinale OX le long du conduit 14 sur au moins 50% de cette face externe, cette paroi lisse étant alors pourvu des orifices de projection. Le caractère lisse de la paroi est formé dès lors que la paroi est dépourvue de formes susceptibles de gêner le perçage d'un orifice de projection dans le prolongement axial du canal 13.

Selon un autre exemple non illustré, la zone est formée par une rainure pratiquée dans l'embase le long du conduit. Une telle rainure est en retrait vers le conduit par rapport à la face externe qui délimite l'embase. En d'autres termes, cette rainure est une-cavité rectiligne aménagée le long du conduit. La longueur des trous formant orifice de projection est ainsi réduite à l'épaisseur du tube délimitant le conduit au droit de la rainure.

La matière utilisée pour former le moyen de solidarisation et le moyen de liaison est synthétique. Il s'agit par exemple d'un polybutylene terephthalate (PBT) ou un polyamide chargé de fibres de verre à 30%. Ainsi, l'embase 20 et le flanc 24 peuvent être réalisés à partir de l'une de ces matières. Dans le cas où le tube 12 est réalisé à partir d'une résine synthétique, celle-ci présente un point de fusion supérieure à la température de la résine utilisée pour mouler le moyen de solidarisation 19 et le moyen de liaison 25, au moment de son injection dans le moule pour former le dispositif de connexion 7.

On notera que la répartition des orifices de projection ménagés au niveau de la zone 30 peut être non-constante. En d'autres termes, l'espacement qui sépare chaque couple d'orifices de projection est différent. Il peut, par exemple, être évolutif et linéaire, notamment croissant ou décroissant d'une extrémité longitudinale à l'autre du dispositif de connexion 7.

Dans le système d'essuyage selon l'invention, on note que les orifices d'aspersion du balai d'essuyage et les orifices de projection 31 du dispositif de connexion 7 peuvent être répartis selon la direction longitudinale du balai d'essuyage de manière à respecter un espacement non constant entre orifices. En d'autres termes, les orifices de projection ménagés dans le dispositif de connexion 7 sont réalisés dans la continuité des orifices d'aspersion réalisés au niveau de la rampe de projection du balai d'essuyage. Le principe de répartition défini dans le document WO2011/160952A1 n'est ainsi pas interrompu par la présence de forme gênante ménagée sur le dispositif de connexion 7.

Selon un exemple, la variabilité d'un tel espacement peut être linéaire, de manière croissante ou décroissante d'une extrémité longitudinale à l'autre du balai d'essuyage constitutif du système d'essuyage selon l'invention.

Les modes de réalisation décrits ci-dessus décrivent un dispositif de connexion comprenant un unique conduit qui s'étend selon la direction longitudinale. L'invention couvre cependant un dispositif de connexion appelé bi-conduits, en ce sens qu'il comprend deux conduits parallèles délimités par le tube, en vue d'alimenter en liquide un balai d'essuyage comprenant des rampes amont et aval, vu du mouvement de rotation de ce balai d'essuyage.

## Revendications

1. Dispositif de connexion (7) apte à relier un balai d'essuyage (3) d'une vitre d'un véhicule à un bras d'essuyage (1), comprenant au moins un moyen de solidarisation (19) sur le balai d'essuyage (3) et un moyen de liaison (25) avec le bras d'essuyage (1), ledit dispositif de connexion (7) comprenant un circuit (11) apte à canaliser un liquide, **caractérisé par le fait que** le circuit (11) est délimité par au moins un tube (12) et en ce que le moyen de solidarisation (19) et le moyen de liaison (25) sont moulés au moins en partie autour du tube (12).

2. Dispositif selon la revendication 1, dans lequel le tube (12) délimite un conduit (14) qui s'étend selon une direction longitudinale (16) d'extension du dispositif de connexion (7), raccordé hydrauliquement à un canal (13) qui s'étend selon un axe (17) transversal à la direction longitudinale (16).

3. Dispositif selon la revendication 2, dans lequel le tube (12) délimite une canalisation (15) en communication avec le canal (13), ladite canalisation (15) s'étendant selon un axe (18) concourant à l'axe (17) d'extension du canal (13).

4. Dispositif selon l'une quelconque des revendications 2 à 3, comprenant une embase (20) dans laquelle est ménagé le conduit (14), ladite embase (20) étant surmontée par un flanc (24) dans lequel sont ménagés au moins en partie le canal (13) et le moyen de liaison (25).

5. Dispositif selon la revendication 4, dans lequel le moyen de solidarisation (19) est ménagé dans l'embase (20).

6. Dispositif selon l'une quelconque des revendications 4 à 5, dans lequel la canalisation (15) est formée dans le flanc (24).

7. Dispositif selon l'une quelconque des revendications 4 à 6, dans lequel la canalisation (15) formée par le tube (12) débouche du flanc (24) par un embout (27).

8. Dispositif selon l'une quelconque des revendications 4 à 7, dans lequel le conduit (14) formé par le tube (12) débouche d'au moins une extrémité longitudinale (28, 29) de l'embase (20) par un embout (27).

9. Dispositif selon l'une quelconque des revendications précédentes, dans lequel le tube (12) est au moins en partie réalisé en une matière métallique.

10. Dispositif selon l'une quelconque des revendications précédentes, dans lequel le moyen de solidarisation (19) et le moyen de liaison (25) sont réalisés en une matière synthétique.

11. Dispositif selon l'une quelconque des revendications précédentes, dans lequel est ménagé au moins un orifice de projection (31) agencé pour projeter le liquide sur la vitre.

12. Système d'essuyage d'une vitre d'un véhicule comprenant un balai d'essuyage (3) relié mécaniquement à un bras d'essuyage (1) au moins par un dispositif de connexion (7) selon l'une quelconque des revendications précédentes.

13. Système selon la revendication 12, dans lequel le balai d'essuyage (3) comprend au moins une rampe de projection (8) d'un liquide de lavage de la vitre alimentée en liquide de lavage par le dispositif de connexion (7).

## Patentansprüche

1. Verbindungsvorrichtung (7), die sich zur Verbindung eines Scheibenwischerelements (3) eines Fensters eines Fahrzeugs mit einem Wischerarm (1) eignet, umfassend mindestens ein Mittel (19) zur festen Anbringung an dem Scheibenwischerelement (3) und ein Mittel (25) zur Verbindung mit dem Wischerarm (1), wobei die Verbindungsvorrichtung (7) einen Kreis (11) umfasst, der eine Flüssigkeit leiten kann, **dadurch gekennzeichnet, dass** der Kreis (11) durch mindestens eine Rohrleitung (12) begrenzt wird und dass das Mittel (19) zur festen Anbringung und das Verbindungsmittel (25) zumindest teilweise um die Rohrleitung (12) herum geformt sind.

2. Vorrichtung nach Anspruch 1, wobei die Rohrleitung (12) eine Leitung (14) begrenzt, die sich entlang einer Längsrichtung (16) der Erstreckung der Verbindungsvorrichtung (7) erstreckt und hydraulisch mit einem Kanal (13) verbunden ist, der sich entlang einer quer zur Längsrichtung (16) verlaufenden Achse (17) erstreckt.

3. Vorrichtung nach Anspruch 2, wobei die Rohrleitung (12) ein Rohr (15) begrenzt, das mit dem Kanal (13) in Verbindung steht, wobei sich das Rohr (15) entlang einer Achse (18) erstreckt, die eine Erstreckungsachse (17) des Kanals (13) schneidet.

4. Vorrichtung nach einem der Ansprüche 2 bis 3, die eine Basis (20) umfasst, in der eine Leitung (14) ausgebildet ist, wobei die Basis (20) von einer Flanke (24) überragt wird, in der der Kanal (13) und das Verbindungsmittel (25) zumindest teilweise ausgebildet sind.

5. Vorrichtung nach Anspruch 4, wobei das Mittel (19) zur festen Anbringung in der Basis (20) ausgebildet ist.

6. Vorrichtung nach einem der Ansprüche 4 bis 5, wobei das Rohr (15) in der Flanke (24) gebildet ist.

7. Vorrichtung nach einem der Ansprüche 4 bis 6, wobei das durch die Rohrleitung (12) gebildete Rohr (15) durch einen Stutzen (27) aus der Flanke (24) heraustritt.

8. Vorrichtung nach einem der Ansprüche 4 bis 7, wobei die durch die Rohrleitung (12) gebildete Leitung (14) durch einen Stutzen (27) aus mindestens einem Längsende (28, 29) der Basis (20) heraustritt.

9. Vorrichtung nach einem der vorhergehenden Ansprüche, wobei die Rohrleitung (12) zumindest teilweise aus einem metallischen Material hergestellt ist.

10. Vorrichtung nach einem der vorhergehenden Ansprüche, wobei das Mittel (19) zur festen Anbringung und das Verbindungsmittel (25) aus einem Kunststoff hergestellt sind.

11. Vorrichtung nach einem der vorhergehenden Ansprüche, in der mindestens eine Sprühöffnung (31) ausgebildet ist, die zum Sprühen der Flüssigkeit auf das Fenster angeordnet ist.

12. Wischersystem für ein Fenster eines Fahrzeugs, das ein Scheibenwischerelement (3) umfasst, das mindestens durch eine Verbindungsvorrichtung (7) nach einem der vorhergehenden Ansprüche mechanisch mit einem Wischerarm (1) verbunden ist.

13. System nach Anspruch 12, wobei das Scheibenwischerelement (3) mindestens eine Sprührampe (8) für eine Waschflüssigkeit für das Fenster umfasst, die durch die Verbindungsvorrichtung (7) mit der Waschflüssigkeit versorgt wird.

## Claims

1. Connection device (7) which can connect a wiper (3) for a window of a vehicle to a wiper arm (1), comprising at least one means (19) for securing on the wiper (3), and a means (25) for connection with the wiper arm (1), said connection device (7) comprising a circuit (11) which can channel a liquid, **characterized in that** the circuit (11) is delimited by at least one tube (12), and **in that** the securing means (19) and the connection means (25) are molded at least partly around the tube (12).

2. Device according to Claim 1, in which the tube (12) delimits a duct (14) which extends according to a longitudinal direction of extension (16) of the connection device (7), which is connected hydraulically to a channel (13) which extends according to an axis (17) transverse to the longitudinal direction (16).

3. Device according to Claim 2, in which the tube (12) delimits piping (15) in communication with the channel (13), said piping (15) extending according to an axis (18) which intersects the axis of extension (17) of the channel (13).

4. Device according to either of Claims 2 and 3, comprising a base (20) in which the duct (14) is provided, said base (20) being surmounted by a flank (24) in which the channel (13) and the connection means (25) are arranged at least partly.

5. Device according to Claim 4, in which the securing means (19) are arranged in the base (20).

6. Device according to either of Claims 4 and 5, in which the piping (15) is formed in the flank (24).

7. Device according to any one of Claims 4 to 6, in which the piping (15) formed by the tube (12) opens from the flank (24) via a joining piece (27).

8. Device according to any one of Claims 4 to 7, in which the duct (14) which is formed by the tube (12) opens from at least one longitudinal end (28, 29) of the base (20) via a joining piece (27).

9. Device according to any one of the preceding claims, in which the tube (12) is at least partly made of a metal material.

10. Device according to any one of the preceding claims, in which the securing means (19) and the connection means (25) are made of a synthetic material.

11. Device according to any one of the preceding claims, in which at least one spraying orifice (31) is provided, which is designed to spray the liquid onto the window.

12. System for wiping a window of a vehicle, comprising a wiper (3) which is connected mechanically to a wiper arm (1) at least by a connection device (7) according to any one of the preceding claims.

13. System according to Claim 12, in which the wiper (3) comprises at least one ramp (8) for spraying a liquid for washing the window, which ramp is supplied with washing liquid by the connection device (7).
